# EUROPÄISCHE PATENTSCHRIFT

(11) **EP 0 744 312 B1**
(45) Veröffentlichungstag und Bekanntmachung des Hinweises auf die Patenterteilung: **10.01.2001**
(21) Anmeldenummer: 96105385.7
(22) Anmeldetag: 04.04.1996
(51) Int. Cl.: B60K 5/12

(54) **Lagerung für eine Antriebseinheit in einem Kraftfahrzeug**
Support for a propulsion unit in a motor vehicle
Support pour ensemble de propulsion dans une automobile

(30) Priorität: 20.05.1995 DE 19518576
(43) Veröffentlichungstag der Anmeldung: 27.11.1996
(73) Patentinhaber: Dr.Ing.h.c. F. Porsche Aktiengesellschaft, 70435 Stuttgart (DE)
(72) Erfinder: Hornisch, Werner, 71735 Eberdingen (DE); Türi, Julius, 71397 Leutenbach (DE); Hawener, Rainer, 75233 Tiefenbronn (DE)

(56) Entgegenhaltungen:
- DE-A- 4 218 149
- DE-A- 4 307 999
- DE-B- 1 078 880

## Beschreibung

Die Erfindung bezieht sich auf eine Lagerung für eine Antriebseinheit in einem Kraftfahrzeug nach dem Oberbegriff des Anspruchs 1.

Aus der DE 43 07 999 A 1 ist ein Antriebsaggregat für ein Kraftfahrzeug bekannt, das eine vordere Lagerung für den Motor und eine hintere Lagerung für das Getriebe - in bezug auf die Fahrtrichtung - aufweist. Die Lagerungen sind in der Weise angeordnet und ausgelegt, daß das Antriebsaggregat als Tilger wirken kann, um Karosserieschwingungen weitestgehend abzubauen.

Aufgabe der Erfindung ist es, eine verbesserte Lagerung für eine Antriebseinheit zu schaffen, die einen baulich einfachen Lageraufbau mit schnell zu montierenden Bauteilen umfaßt.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß das einzige Motorlager sowie die Getriebelagerung aus Bauteilen besteht, die einfach zu montieren bzw. schnell und gut zugänglich am Antriebsaggregat und am Fahrzeugaufbau zu befestigen sind. So besteht das Motorlager aus einer Lagerplatte mit einer Aufnahme für das Lager, die in einer aufbauseitig befestigten Trägerplatte zwischen zwei Schenkeln einsetzbar und mittels zweier Schrauben gehalten wird. Auch die Lagerung für das Getriebegehäuse ist so aufgebaut, daß eine einfache und schnelle Montage gewährleistet ist.

Nach einer ersten Ausführung einer Getriebelagerung für ein Schaltgetriebe bestehen die quer vom Gehäuse wegragenden Lagerarme aus Blech und sind aufrecht gestellt angeordnet und werden aufbauseitig in elastischen Lagern abgestützt und am Getriebegehäuse mittels eines abgewinkelten Steges lösbar über eine aus Klemmsegmenten bestehende Halteeinrichtung befestigt. Diese Halteeinrichtung hat den Vorteil der Möglichkeit einer einfachen Vormontage, Ausgleich von Toleranzen und des weiteren können sich die blattfederartig ausgebildeten Lagerarme in Fahrzeuglängsrichtung im Betrieb auslenken. Durch die Ausbildung der Klemmsegmente mit einer im Radiusbereich des abgewinkelten Steges des Lagerarmes angeordneten abgerundeten Kante bzw. nasenförmige Kante wird der Lagerarm in diesem Bereich bei Längsbiegung unterstützt.

Nach einer weiteren Ausführung zur Lagerung eines Automatgetriebes umfaßt die Halteeinrichtung Lagerarme aus Blech, die ebenfalls blattfederartig ausgeführt sind und welche mit einem Adapter aus einem Leichtmetalldruckguß verbunden werden. Zur Aufnahme und Befestigung der Lagerarme weist der Adapter vorragende Zungen auf, die in einem Schlitz die freien Enden der Lagerarme aus Stahlblech aufnehmen können.

Die Lagerarme der beiden Ausführungen weisen jeweils zwei einzelne, einen Freiraum zwischen sich aufweisende Arme auf, die endseitig mit dem Adapter über Niete, Schrauben oder dgl. Verbindungsmittel verbunden sind. Entsprechend sind auch die Lagerarme der weiteren Ausführung ausgebildet, wobei im Bereich der Klemmelemente ein Steg die beiden Lagerarme untereinander verbinden kann.

Ausführungsbeispiele der Erfindung sind in der Zeichnung dargestellt und werden im folgenden näher beschrieben.
Es zeigen:
- Fig. 1: eine Draufsicht auf eine schematisch dargestellte Antriebseinheit mit Motorlagerung und Getriebelagerung,
- Fig. 2: eine schaubildliche Darstellung einer Motorlagerung, bestehend aus einer Lager- und Trägerplatte,
- Fig. 3: eine schaubildliche Darstellung der Lagerplatten,
- Fig. 4: eine schaubildliche Darstellung auf die Getriebelagerung für ein Schaltgetriebe,
- Fig. 5: eine Draufsicht auf einen Lagerarm einer Getriebelagerung gem. Fig. 4 mit elastischen Lager- und Klemmsegmenten,
- Fig. 6: eine Ansicht auf die Klemmsegmente,
- Fig. 7: einen Schnitt nach der Linie VII-VII durch die Klemmsegmente,
- Fig. 8: eine schaubildliche Darstellung auf die Getriebelagerung für ein automatisches Getriebe und
- Fig. 9: eine Draufsicht auf die Getriebelagerung gem. Fig. 8.

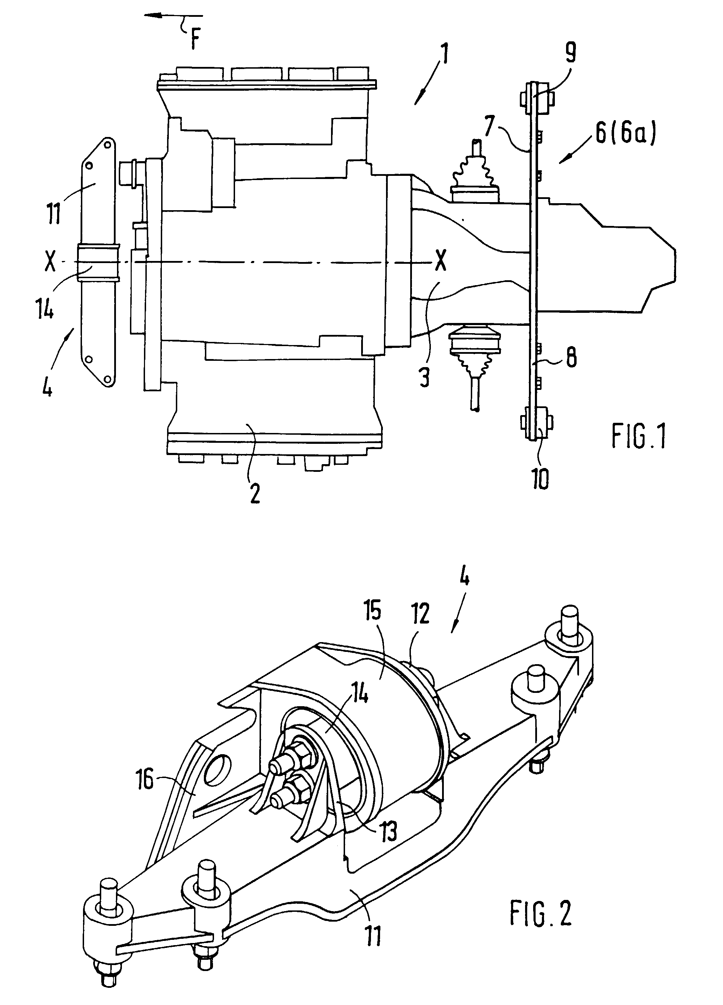

In Fig. 1 list ein Antriebsaggregat 1, bestehend aus einer Brennkraftmaschine 2 und einem Getriebe 3 dargestellt. Über eine Motorlagerung 4, bestehend aus einem einzigen elastischen Lager 5 und einer Getriebelagerung 6, welche zwei querverlaufende Lagerarme 7, 8 mit jeweils einem endseitigen elastischen Lager 9, 10 aufweist, ist das Antriebsaggregat 1 am Fahrzeugaufbau abgestützt und kann als Tilgermasse wirken.

Die Brennkraftmaschine 2 ist als Boxermotor ausgeführt und als Mittelmotor im Fahrzeug angeordnet. Die Lagerung 4 für den Motor ist unmittelbar hinter den nur eine vordere Sitzreihe aufweisenden Fahrzeug angeordnet und das elastische Lager 4 ist in einer senkrechten Mittelebene X-X einer Kurbelwelle des Motors angeordnet.

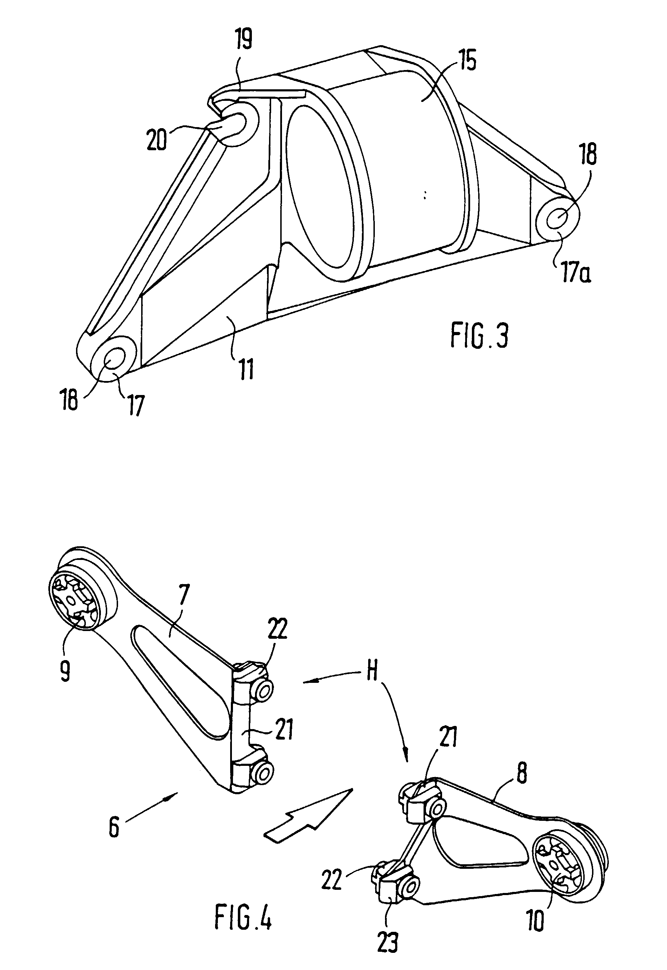

Die Motorlagerung 4 gemäß der Fig. 2 und 3 umfaßt eine mit dem Fahrzeugaufbau verbundene Trägerplatte 11, die zwischen aufrechten Schenkeln 12, 13 ein elastisches Lager 14 aufnimmt, das in einer vorstehenden Aufnahme 15 einer Lagerplatte 16 angeordnet ist.

Die Lagerplatte 16 ist trapezförmig ausgebildet, weist an unteren Eckpunkten 17, 17a Bohrungen 18 für Befestigungsschrauben zum Verbinden mit dem Motorgehäuse auf. Damit eine einfache Montage bei den sehr beengten Platzverhältnissen möglich ist, weist die Lagerplatte 16 in einem oberen Eckpunkt 19 einen nach außen offenen Querschlitz 20 auf, in der eine Befestigungsschraube gehalten ist.

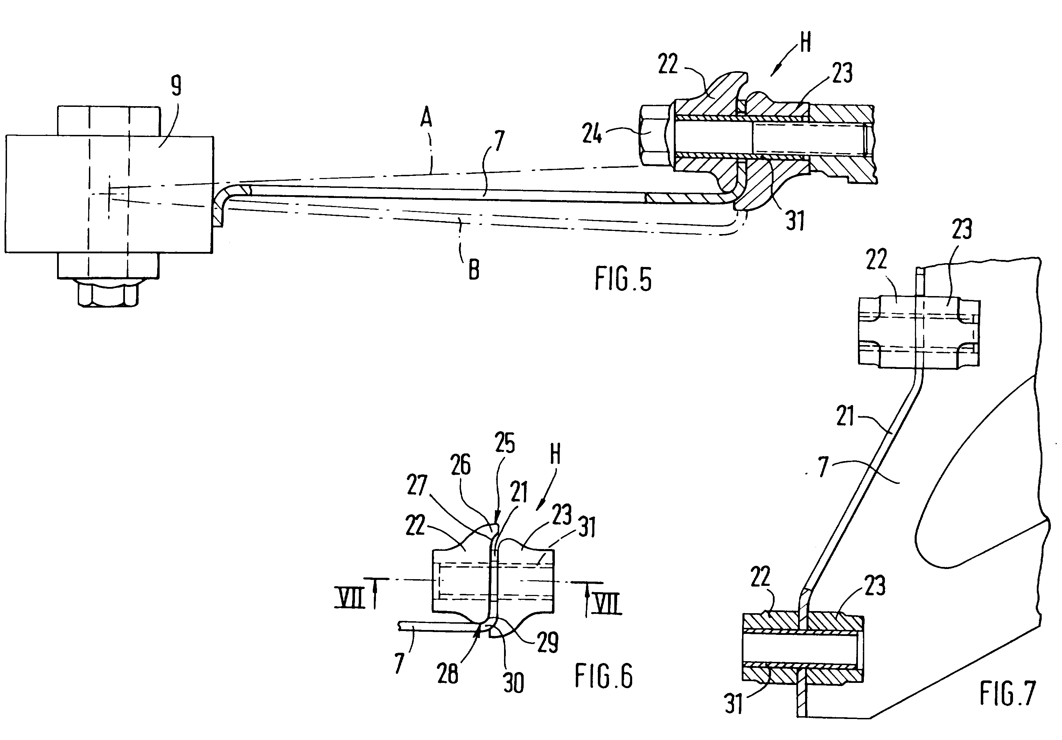

Eine erste Getriebelagerung 6 für ein Schaltgetriebe (Fig. 4 bis 7) umfaßt die Lagerarme 7, 8. Diese sind zur Befestigung mit dem Getriebegehäuse mit einem abgewinkelten Steg 21 versehen, der zwischen Klemmsegmenten 22, 23 einer Halteeinrichtung H eingespannt gehalten ist. Für jeden Lagerarm 7, 8 sind jweils zwei übereinander angeordnete Klemmsegmente 22, 23 vorgesehen, wie Fig. 7 näher zeigt.

Die Klemmsegmente 22, 23 sind jeweils formgleich ausgeführte Teile, die auf Umschlag, d.h. zueinander, um 180 ° versetzt über eine Befestigungsschraube 24 zusammen spannbar mit den Lagerarmen 7,8 am Getriebegehäuse befestigbar sind.

Das Klemmsegment 22 und 23 weist an einer Kante 25 seiner Spannfläche eine nasenförmige Anformung 26 mit einem Innenradius 27 auf. Die gegenüberliegende Kante 28 ist mit einem Außenradius 29 versehen. Die Radien 27 und 29 entsprechen dem Innenradius bzw. dem Außenradius des abgewinkelten Steges 21 der Lagerarme 7, 8.

Wie Fig. 6 näher zeigt, wird durch die Ausbildung der Innen- und Außenradien 27, 29 die Biegekante 30 des Lagerarmsteges 21 umgriffen, damit bei Längsbiegungen der Lagerarm 7, 8 in Richtungen A und B eine Unterstützung erreicht wird.

Die beiden Klemmsegmente 22, 23 sind über eine Buchse 31 zueinander in Lage gehalten und sie bilden gleichzeitig eine Verliersicherung.

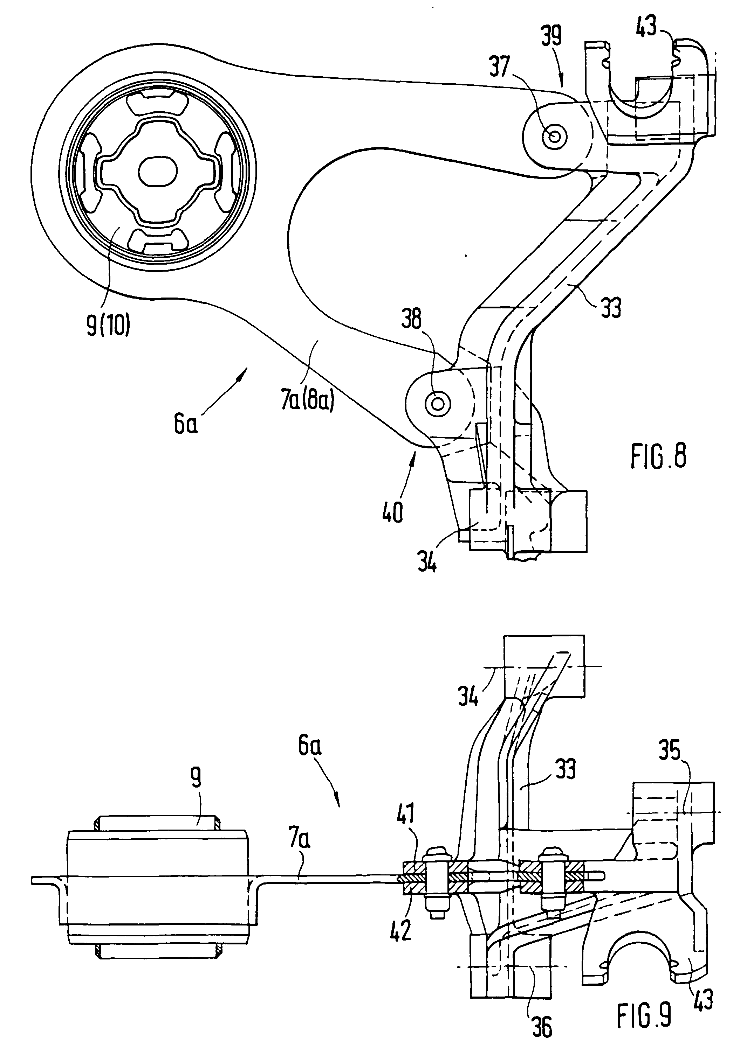

Eine weitere Getriebelagerung 6a für eine automatisches Getriebe ist in den Fig. 8 und 9 dargestellt. Da das automatische Getriebe gewichtsmäßig wesentlich schwerer als ein Schaltgetriebe ist, ist auch die Lagerung stabiler ausgeführt.

Diese Lagerung 6a umfaßt einen über drei Schrauben am Getriebegehäuse befestigten Halteeinrichtung H1, die aus einem Adapter 33 besteht, welcher aus einem Leichtmetalldruckguß gebildet ist. Die Befestigungsschrauben 34 bis 36 sind nur als Mittellinien angedeutet.

Die Lagerarme 7a, 8a sind als dünne aufrechtstehende Bleche, ähnlich Blattfedern, ausgeführt, wie auch die Lagerarme 7, 8 für das Schaltgetriebe. Endseitig sind jeweils die elastischen Lager 9, 10 angeordnet. Die Verbindung zum Adapter 33 erfolgt über zwei Verbindungen 37, 38, die aus einer Nietung oder einer Verschraubung bestehen können.

Die freien Enden 39, 40 der Lagerarme 7a, 8a sind in Schlitzen 41 von quer vorstehenden Zungen 42 des Adapters 33 angeordnet. Die Schlitze 41 sind keilförmig nach außen hin aufgeweitet ausgeführt, d.h. die freien Enden sind problemlos einführbar. Durch die Befestigung über Niete oder dgl. wird der keilförmige Schlitz zusammengezogen.

Am Adapter 33 ist zur Aufnahme eines Widerlagers W 3 eine Halterung zum Einhängen eines Seilzuges vorgesehen, die an den Adapter mit angegossen ist.

## Patentansprüche

1. Lagerung für eine Antriebseinheit (1) in einem Kraftfahrzeug, die über ein vorderes einziges Lager (4), gehalten ist und eine weitere Lagerung (9, 10) zu beiden Seiten eines Getriebegehäuses vorgesehen ist, die aus quer wegragenden Lagerarmen (7, 8) besteht, welche endseitig elastische Lagerelemente (9, 10) aufnehmen, und daß die Lagerarme (7, 8) des Getriebegehäuses (6; 6a) in Längsrichtung biegeweich ausgeführt sind und über eine Halteeinrichtung (H) am Getriebegehäuse festsetzbar sind, dadurch gekennzeichnet, daß die Halteeinrichtung (H) aus zwei Klemmsegmenten (22, 23) besteht, die zwischen sich jeweils einen abgewinkelten Steg (21) des Lagerarmes (7, 8) aufnehmen und beide Klemmsegmente (22, 23) über eine Schraube (24) am Getriebegehäuse befestigbar sind und aus formgleich ausgebildeten Teilen bestehen und im Einbauzustand auf Umschlag um 180° versetzt zueinander verbaut angeordnet sind und die Klemmsegmente (22, 23) eine abgerundete Außenkante (29) und gegenüberliegend eine nasenförmige Ausformung (26) mit innenseitig ausgerundeter Kante (27) aufweisen.

2. Lagerung nach Anspruch 1, dadurch gekennzeichnet, daß im Einbauzustand die nasenförmige Ausformung (26) des einen Klemmsegments (23) den abgewinkelten Steg (21) des Lagerarmes (7, 8) von außen übergreift und die abgerundete Kante (29) des weiteren innenliegenden Klemmsegments (22) in der Rundung des abgewinkelten Steges (21) liegt und der nasenförmigen Ausformung (26) des außenliegenden Klemmelements (23) gegenübersteht.

3. Lagerung nach Anspruch 1 oder einem der vorhergehenden Ansprüche, dadurch gekennzeichnet, daß die Klemmsegmente (22, 23) über eine Buchse (31) in der die Befestigungsschraube (24) angeordnet ist, zueinander in Lage gehalten sind.

## Claims

1. A mounting for a drive unit (1) in a motor vehicle, held by way of a front single bearing (4), and a further mounting (9, 10) is provided on both sides of a gearbox casing and comprises transversely projecting bearing arms (7, 8) receiving resilient bearing members (9, 10) at the ends, and the bearing arms (7, 8) of the gearbox casing (6; 6a) are flexible in the longitudinal direction and can be fixed on the gearbox casing by way of a retaining device (**H**), **characterized in that** the retaining device (**H**) comprises two clamping segments (22, 23) which receive a respective angled web (21) of the bearing arm (7, 8) between themselves and the two clamping segments (22, 23) can be secured to the gearbox casing by way of a bolt (24) and comprise parts of the same shape and are arranged built up with respect to each other and turned over with an offset of 180° in the fitted state, and the clamping segments (22, 23) have a rounded outer edge (29) and, opposite, a projection-shaped moulded-out portion (26) with a rounded edge (27) on the inside.

2. A mounting according to Claim 1, **characterized in that** in the fitted state the projection-shaped moulded-out portion (26) of one clamping segment (23) engages over the angled web (21) of the bearing arm (7, 8) from the outside, and the rounded edge (29) of the further clamping segment (22) on the inside is situated in the rounding of the angled web (21) and is opposed the projection-shaped moulded-out portion (26) of the clamping segment (23) on the outside.

3. A mounting according to Claim 1 or one of the preceding Claims, **characterized in that** the clamping segments (22, 23) are held in position with respect to each other by way of a bush (31) in which the fastening bolt (24) is arranged.

## Revendications

1. Support pour un groupe moteur (1) d'un véhicule automobile, qui est maintenu par un seul palier avant (4) et des deux côtés d'une boîte de vitesses est prévu un autre support (9, 10) qui est constitué de bras de palier (7, 8), lesquels s'étendent transversalement et reçoivent à leurs extrémités des éléments de palier (9, 10) élastiques, et les bras de palier (7, 8) de la boîte de vitesses (6 ; 6a) sont souples à la flexion dans la direction longitudinale et peuvent être fixés à la boîte de vitesse par un dispositif de maintien (H), caractérisé en ce que le dispositif de maintien (H) est constitué de deux segments de serrage (22, 23) qui reçoivent entre eux une nervure coudée (21) du bras de palier (7, 8), les deux segments de serrage (22, 23) pouvant être fixés à la boîte de vitesses par une vis (24), et sont constitués de parties de forme identique et, à l'état monté, ils sont disposés masqués, décalés l'un par rapport à l'autre de 180 degrés, et les segments de serrage (22, 23) présentent une arête extérieure (29) arrondie, et en vis-à-vis un bossage (26) en forme d'ergot avec arête (27) arrondie côté intérieur.

2. Support selon la revendication 1, caractérisé en ce qu'à l'état monté, le bossage (26) en forme d'ergot d'un segment de serrage (23) passe de l'extérieur sur la nervure (21) coudée du bras de palier (7, 8) et l'arête (29) arrondie de l'autre segment de serrage (22) situé à l'intérieur, se situe dans l'arrondi de la nervure (21) coudée et fait face au bossage (26) en forme d'ergot de l'élément de serrage (23) situé à l'extérieur.

3. Support selon la revendication 1, ou l'une des revendications précédentes, caractérisé en ce que les segments de serrage (22, 23) sont maintenus en position l'un par rapport à l'autre, par une douille (31) dans laquelle est disposée la vis de fixation (24).
